# EUROPEAN PATENT APPLICATION

(11) **EP 4 769 645 A1**
(43) Date of publication of application: **01.07.2026**
(21) Application number: 25807866.6
(22) Date of filing: 08.05.2025
(51) Int. Cl.: H01M 10/48, G08B 21/00

(54) **BATTERY ABNORMALITY DIAGNOSIS APPARATUS AND METHOD**

(30) Priority: 24.05.2024 KR 20240067662; 07.05.2025 KR 20250059026
(71) Applicant: LG Energy Solution, Ltd., Seoul 07335 (KR)
(72) Inventor: LEE, Bumhee, Daejeon 34122 (KR)
(74) Representative: Goddar, Heinz J.
(86) International application number: PCT/KR2025/006134
(87) International publication number: WO 2025/244326

(57) **Abstract**

A battery abnormality diagnosis apparatus for diagnosing whether at least one battery included in a battery assembly is abnormal, according to an embodiment of the present invention, can monitor at least one of a temperature or a temperature change amount of the battery, and determine whether the battery is abnormal on the basis thereof.

## Description

### [Technical Field]

This application claims priority to and the benefit of Korean Patent Application No. 10-2024-0067662 filed in the Korean Intellectual Property Office on May 24, 2024 and Korean Patent Application No. 10-2025-0059026 filed in the Korean Intellectual Property Office on May 7, 2025 the entire contents of which are incorporated herein by reference.

The present invention relates to a battery abnormality diagnosis apparatus and method, and more particularly, to a battery abnormality diagnosis apparatus and method for detecting temperature changes of each of a plurality of batteries in a battery assembly to detect abnormality occurrence at an early stage.

### [Background Art]

As depletion of fossil fuels proceeds and interest in environmental pollution increases, importance of eco-friendly alternative energy source is gradually increasing. Among various alternative energy sources, demand for rechargeable battery systems is rapidly increasing.

Secondary batteries are being applied to various industrial fields from mobile application devices to vehicles, robots and energy storage devices, as a response to environmental regulations and high oil price issues.

In general, lithium secondary batteries are used for batteries, which leads to a risk of fire or explosion if an internal or external defect occurs. Therefore, it is important to diagnose the status of the batteries in real time.

Among them, a battery system applied to automobiles has a disadvantage in that the battery is frequently damaged due to an abnormal temperature increase during operation or in a standby state.

Accordingly, in the past, a system has been provided that monitors whether the battery system is operating within a specific temperature range, and transmits a warning signal to a driver if the temperature of an operating battery system exceeds the specific temperature range and disconnects a contactor connected to the battery if the warning signal accumulates.

However, since this is a post-safety measure, it has a disadvantage in that it is difficult to prevent damage due to an abnormal temperature increase that has already occurred.

### [Detailed Description of the Invention]

### [Technical Problem]

To obviate one or more problems of the related art, embodiments of the present disclosure provide a battery abnormality diagnosis apparatus.

To obviate one or more problems of the related art, embodiments of the present disclosure also provide a battery abnormality diagnosis method.

### [Technical Solution]

In order to achieve the objective of the present disclosure, a battery abnormality diagnosis apparatus, for diagnosing whether at least one battery included in a battery assembly is abnormal, may include a memory ; and a processor configured to execute at least one instruction stored in the memory, wherein the at least one instruction may include an instruction to monitor at least one of temperature and temperature change amount of the battery; and an instruction to determine whether the battery is abnormal based on at least one of the temperature and the temperature change amount of the battery.

Here, the instruction to determine whether the battery is abnormal based on at least one of the temperature and the temperature change amount of the battery may include an instruction to determine that an abnormality has occurred in the battery if the temperature of the battery exceeds a predetermined first threshold temperature when the temperature of the battery is rising; and an instruction to determine that an abnormality has occurred in the battery if the temperature of the battery is below a predetermined second threshold temperature when the temperature of the battery is dropping.

Meanwhile, the at least one instruction may further include an instruction to diagnose a cause of the abnormality of the abnormal battery if it is determined that an abnormality has occurred in the battery.

According to an embodiment, the instruction to diagnose the cause of the abnormality of the abnormal battery may include an instruction to measure temperature of at least one component adjacent to the abnormal battery based on arrangement information of batteries in the battery assembly; and an instruction to diagnose that ignition has occurred in the abnormal battery if the temperature of the at least one component is within a predetermined error range compared to the temperature of the abnormal battery when the temperature of the abnormal battery is rising.

According to another embodiment, the instruction to diagnose the cause of the abnormality of the abnormal battery may include an instruction to measure temperature of at least one component adjacent to the abnormal battery based on arrangement information of batteries in the battery assembly; and an instruction to diagnose that the abnormal battery is in a low temperature state if the temperature of the at least one component is within a predetermined error range compared to the temperature of the abnormal battery when the temperature of the abnormal battery is dropping.

In addition, according to yet another embodiment, the instruction to diagnose the cause of the abnormality of the abnormal battery may include an instruction to measure temperature of at least one component adjacent to the abnormal battery based on arrangement information of batteries in the battery assembly; and an instruction to diagnose that an abnormality has occurred in a temperature measuring device in the battery assembly if temperature change of the at least one component compared to the abnormal battery is outside a predetermined error range.

Meanwhile, the instruction to monitor at least one of temperature and temperature change amount of the battery may include an instruction to measure a rate at which the temperature of the battery changes.

Here, the instruction to determine whether the battery is abnormal based on the at least one of the temperature and the temperature change amount of the battery may include an instruction to determine whether the battery is abnormal by comparing an absolute value of the rate with a predetermined threshold rate.

According to an embodiment, the instruction to determine whether the battery is abnormal by comparing the absolute value of the rate with the predetermined threshold rate may include an instruction to determine that the battery is abnormal when the absolute value of the rate is equal to or greater than a predetermined first threshold rate and a temperature change occurs in at least one component adjacent to the battery based on the arrangement information of batteries in the battery assembly.

Meanwhile, according to another embodiment, the instruction to determine whether the battery is abnormal by comparing the absolute value of the rate with the predetermined threshold rate may include an instruction to count a number of times when the absolute value of the rate is equal to or higher than a second threshold rate and lower than the first threshold rate, wherein the second threshold rate is lower than the first threshold rate.

Here, wherein the instruction to count the number of times may include an instruction to provide a warning signal to a user to prevent abnormality of the battery due to temperature changes in external environment when the number of times is equal to or greater than a predetermined threshold number of times.

In addition, according to yet another embodiment, wherein the instruction to determine whether the battery is abnormal by comparing the absolute value of the rate with the predetermined threshold rate may include an instruction to determine that the battery is normal if the absolute value of the rate is less than a predetermined second threshold rate.

According to another embodiment of the present disclosure, a battery abnormality diagnosing method, for diagnosing whether at least one battery included in a battery assembly is abnormal, may include monitoring at least one of temperature and temperature change amount of the battery; and determining whether the battery is abnormal based on at least one of the temperature and the temperature change amount of the battery.

Here, the determining of whether the battery is abnormal based on at least one of the temperature and the temperature change amount of the battery may include determining that an abnormality has occurred in the battery if the temperature of the battery exceeds a predetermined first threshold temperature when the temperature of the battery is rising; and determining that an abnormality has occurred in the battery if the temperature of the battery is below a predetermined second threshold temperature when the temperature of the battery is dropping.

Meanwhile, the method may further include diagnosing a cause of the abnormality of the abnormal battery if it is determined that an abnormality has occurred in the battery.

According to an embodiment, the diagnosing the cause of the abnormality of the abnormal battery may include measuring temperature of at least one component adjacent to the abnormal battery based on arrangement information of batteries in the battery assembly; and diagnosing that ignition has occurred in the abnormal battery if the temperature of the at least one component is within a predetermined error range compared to the temperature of the abnormal battery when the temperature of the abnormal battery is rising.

According to another embodiment, the diagnosing the cause of the abnormality of the abnormal battery may include measuring temperature of at least one component adjacent to the abnormal battery based on arrangement information of batteries in the battery assembly; and diagnosing that the abnormal battery is in a low temperature state if the temperature of the at least one component is within a predetermined error range compared to the temperature of the abnormal battery when the temperature of the abnormal battery is dropping.

Furthermore, according to yet another embodiment, the diagnosing the cause of the abnormality of the abnormal battery may include measuring temperature of at least one component adjacent to the abnormal battery based on arrangement information of batteries in the battery assembly; and diagnosing that an abnormality has occurred in a temperature measuring device in the battery assembly if temperature change of the at least one component compared to the abnormal battery is outside a predetermined error range.

Meanwhile, the monitoring at least one of the temperature and the temperature change amount of the battery may include measuring a rate at which the temperature of the battery changes.

Here, the determining whether the battery is abnormal based on the at least one of the temperature and the temperature change amount of the battery may include determining whether the battery is abnormal by comparing an absolute value of the rate with a predetermined threshold rate.

According to an embodiment, the determining whether the battery is abnormal by comparing the absolute value of the rate with the predetermined threshold rate may include determining that the battery is abnormal when the absolute value of the rate is equal to or greater than a predetermined first threshold rate and a temperature change occurs in at least one component adjacent to the battery based on the arrangement information of batteries in the battery assembly.

Meanwhile, according to another embodiment, the determining whether the battery is abnormal by comparing the absolute value of the rate with the predetermined threshold rate may include counting a number of times when the absolute value of the rate is equal to or higher than a second threshold rate and lower than the first threshold rate, wherein the second threshold rate is lower than the first threshold rate.

Here, the counting the number of times may include providing a warning signal to a user to prevent abnormality of the battery due to temperature changes in external environment when the number of times is equal to or greater than a predetermined threshold number of times.

Furthermore, the determining whether the battery is abnormal by comparing the absolute value of the rate with the predetermined threshold rate may include determining that the battery is normal if the absolute value of the rate is less than a predetermined second threshold rate.

### [Advantageous Effects]

The battery abnormality diagnosis apparatus and method according to embodiments of the present invention monitors the temperature and temperature change amount of each of a plurality of batteries in a battery assembly and determines whether an abnormality has occurred in a specific battery, thereby enabling detection of abnormality occurrence in a specific battery even within a normal operating temperature range of the battery.

### [Brief Description of the Drawings]

FIG. 1 is a block diagram of a battery system to which embodiments of the present invention can be applied.
FIG. 2 is a block diagram of the battery abnormality diagnosis apparatus according to embodiments of the present invention.
FIG. 3 is a flow chart of a battery abnormality diagnosis method according to embodiments of the present invention.
FIG. 4 is a flow chart for explaining a step of determining whether a specific battery is abnormal in a battery abnormality diagnosis method according to embodiments of the present invention.
FIG. 5 is a structural diagram of a battery assembly according to embodiments of the present invention.
FIG. 6 is an image showing a specific battery in which an abnormality has occurred in a battery assembly and an adjacent battery according to embodiments of the present invention.
FIG. 7 is a flowchart for explaining a method for diagnosing an abnormality in a specific battery based on temperature information of at least one adjacent battery in a battery abnormality diagnosis method according to an embodiment of the present invention.
FIG. 8 is a flowchart for explaining a step of determining whether a specific battery is abnormal in the battery abnormality diagnosis methods according to another embodiment of the present invention.
FIG. 9 is a flowchart for explaining a method of determining whether a specific battery has an abnormality based on a temperature change rate of each battery, in the battery abnormality diagnosis methods according to another embodiment of the present invention.

- 100:: memory
- 200:: processor
- 300:: transceiving device
- 400:: input interface device
- 500:: output interface device
- 600:: storage device
- 700:: bus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

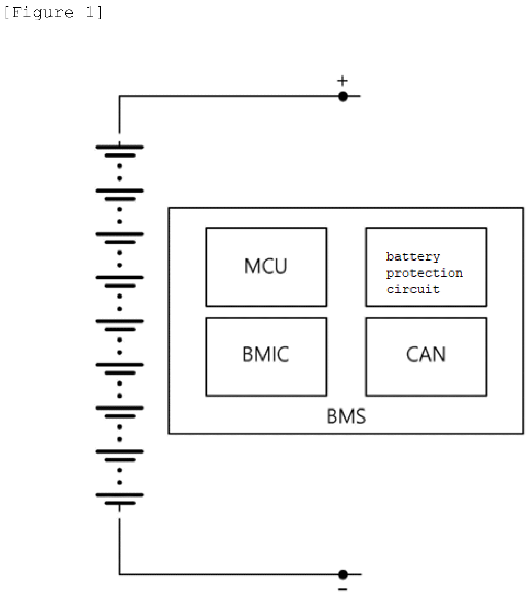

FIG. 1 is a block diagram of a battery system to which embodiments of the present invention can be applied.

Referring to FIG. 1, a basic unit of a battery for storing power in a battery system is typically a battery cell. A series/parallel combination of battery cells may form a battery module, and a plurality of batteries (battery modules) may form a battery pack. In other words, a battery module may be a basic unit of a battery system as a series/parallel combination of battery cells. Here, depending on a device or system in which the battery is used, the battery module may also be referred to as a battery pack.

According to embodiments, a battery pack or battery module in a battery system may be configured to include a plurality of battery cells connected in series.

The battery pack or module may be connected to a load through a positive terminal and a negative terminal to perform charging or discharging. The most commonly used battery is a lithium-ion (Li-Ion) battery.

A battery management system (BMS) may be connected to a battery module or battery pack.

The battery management system may monitor a current, a voltage and a temperature of each battery cell or pack to be managed, calculate state of charge (SOC) of the battery based on monitoring results to control charging and discharging. Here, the state of charge (SOC) refers to a current state of charge of a battery, represented in percent points [%], and the State of Health (SOH) may be a current deteriorated condition of a battery compared to its ideal conditions, represented in percent points [%].

As described, the battery management system (BMS) may monitor battery cells or battery packs and read their individual voltage values. Then, the BMS may transmit their individual voltage values to other systems connected to the battery.

Furthermore, the battery management system monitors at least one electrical component constituting the battery system and passes their status data on to other systems. For this, the BMS includes a communication module for communicating with other systems in a device including the battery system. Here, the battery system may be applied to a vehicle.

The communication module of the BMS may communicate with other systems in the device using Controller Area Network (CAN). Here, components, modules or systems in the BMS are connected to each other through a CAN bus. Accordingly, the battery management system (BMS) may use CAN communication to remotely transmit status data obtained through monitoring of the battery pack or module and at least one electrical component constituting the battery management system (BMS) to other systems.

Meanwhile, the battery management system (BMS) may equally balance charges of the battery cells in order to extend the life of the battery system.

The battery management system (BMS) may include various components such as a fuse, a current sensing element, a thermistor, a switch, and a balancer to perform such operations. In most cases, a micro controller unit (MCU) or a battery monitoring integrated chip (BMIC) for interworking and controlling these components is additionally included in the BMS. Here, the BMIC may be an IC-type component which is located inside the battery management system (BMS) and measures information such as voltage, temperature, and current of the battery cell/module.

In addition, in general, the battery management system (BMS) may monitor battery cells and battery packs and control the battery protection circuit when an abnormality occurs in any one battery cell or battery pack. For example, when an abnormality occurs in any one battery cell or pack, the battery management system (BMS) may block the charge/discharge circuit to limit the use of the corresponding battery cell or pack.

The battery abnormality diagnosis apparatus according to embodiments of the present invention may be implemented by being included in the configuration of the battery management system (BMS).

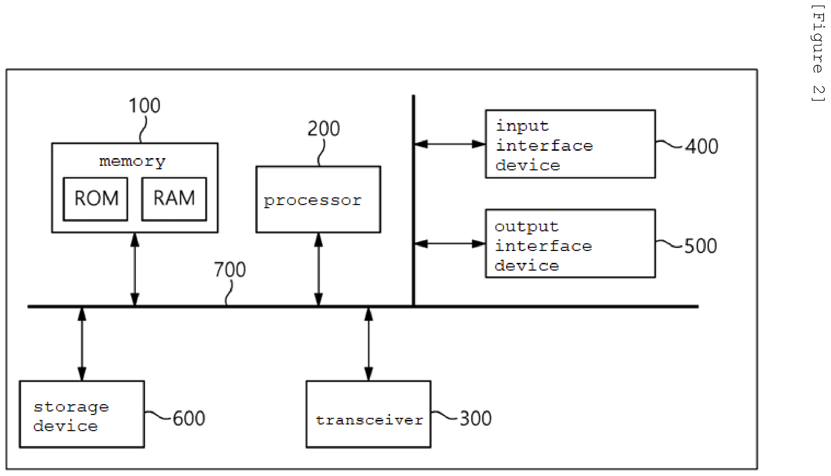

FIG. 2 is a block diagram of the battery abnormality diagnosis apparatus according to embodiments of the present invention.

Referring to FIG. 2, the battery abnormality diagnosis apparatus may be applied to a battery management apparatus applied to an automobile. Accordingly, the battery abnormality diagnosis apparatus may monitor temperature changes of batteries in a battery assembly applied to an automobile and determine whether a specific battery is abnormal. Here, the battery assembly may be a battery pack, and the battery may be a battery cell accommodated inside the battery pack.

In addition, if a battery abnormality diagnosis apparatus determines that an abnormality of a specific battery has occurred, the battery abnormality diagnosis apparatus may diagnose a cause of the abnormality occurrence of the specific battery.

Describing in more detail by hardware configuration, the battery abnormality diagnosis apparatus may include a memory 100, a processor 200, a transceiving device 300, an input interface device 400, an output interface device 500, and a storage device 600.

According to embodiments, each of the components 100, 200, 300, 400, 500, 600 included in the battery abnormality diagnosis apparatus may be connected by a bus 700 to communicate with each other.

Among the above components 100, 200, 300, 400, 500, 600, the memory 100 and the storage device 600 may be configured as at least one of a volatile storage medium and a nonvolatile storage medium. For example, the memory 100 and the storage device 600 may be configured with at least one of read-only memory (ROM) and random access memory (RAM).

Among these, the memory 100 may include at least one command executed by the processor 200.

According to embodiments, the at least one instruction may include an instruction to monitor at least one of temperature and temperature change amount of the battery; and an instruction to determine whether the battery is abnormal based on at least one of the temperature and the temperature change amount of the battery.

Here, the instruction to determine whether the battery is abnormal based on at least one of the temperature and the temperature change amount of the battery may include an instruction to determine that an abnormality has occurred in the battery if the temperature of the battery exceeds a predetermined first threshold temperature when the temperature of the battery is rising; and an instruction to determine that an abnormality has occurred in the battery if the temperature of the battery is below a predetermined second threshold temperature when the temperature of the battery is dropping.

Meanwhile, the at least one instruction may further include an instruction to diagnose a cause of the abnormality of the abnormal battery if it is determined that an abnormality has occurred in the battery.

According to an embodiment, the instruction to diagnose the cause of the abnormality of the abnormal battery may include an instruction to measure the temperature of at least one component adjacent to the abnormal battery based on arrangement information of batteries in the battery assembly; and an instruction to diagnose that ignition has occurred in the abnormal battery if the temperature of the at least one component is within a predetermined error range compared to the temperature of the abnormal battery when the temperature of the abnormal battery is rising.

According to another embodiment, the instruction to diagnose the cause of the abnormality of the abnormal battery may include an instruction to measure the temperature of at least one component adjacent to the abnormal battery based on arrangement information of batteries in the battery assembly; and an instruction to diagnose that the abnormal battery is in a low temperature state if the temperature of the at least one component is within a predetermined error range compared to the temperature of the abnormal battery when the temperature of the abnormal battery is dropping.

In addition, according to yet another embodiment, the instruction to diagnose the cause of the abnormality of the abnormal battery may include an instruction to measure the temperature of at least one component adjacent to the abnormal battery based on arrangement information of batteries in the battery assembly; and an instruction to diagnose that an abnormality has occurred in a temperature measuring device in the battery assembly if the temperature change of the at least one component compared to the abnormal battery is outside a predetermined error range.

Meanwhile, the instruction to monitor at least one of temperature and temperature change amount of the battery may include an instruction to measure a rate at which the temperature of the battery changes.

Here, the instruction to determine whether the battery is abnormal based on the at least one of the temperature and the temperature change amount of the battery may include an instruction to determine whether the battery is abnormal by comparing the absolute value of the rate with a predetermined threshold rate.

According to an embodiment, wherein the instruction to determine whether the battery is abnormal by comparing the absolute value of the rate with the predetermined threshold rate may include an instruction to determine that the battery is abnormal when the absolute value of the rate is equal to or greater than a predetermined first threshold rate and a temperature change occurs in at least one component adjacent to the battery based on the arrangement information of batteries in the battery assembly.

Meanwhile, according to another embodiment, the instruction to determine whether the battery is abnormal by comparing the absolute value of the rate with the predetermined threshold rate may include an instruction to count a number of times when the absolute value of the rate is equal to or higher than a second threshold rate and lower than the first threshold rate, wherein the second threshold rate is lower than the first threshold rate.

Here, wherein the instruction to count number of times may include an instruction to provide a warning signal to a user to prevent abnormality of the battery due to temperature changes in external environment when the number of times is equal to or greater than a predetermined threshold number of times.

In addition, according to yet another embodiment, wherein the instruction to determine whether the battery is abnormal by comparing the absolute value of the rate with the predetermined threshold rate may include an instruction to determine that the battery is normal if the absolute value of the rate is less than a predetermined second threshold rate.

Meanwhile, the processor 200 may mean a central processing unit (CPU), a graphics processing unit (GPU), or a dedicated processor on which methods according to embodiments of the present invention are performed.

The processor 200 may execute at least one program command stored in the memory 100, as described above.

The battery abnormality diagnosis apparatus according to embodiments of the present invention has been described above. A method for diagnosing a battery abnormality using the battery abnormality diagnosis apparatus will be described in the following.

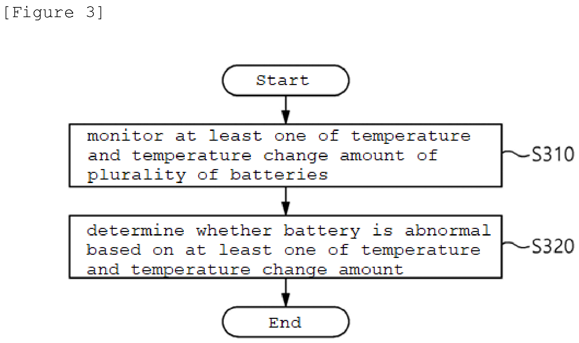

FIG. 3 is a flow chart of a battery abnormality diagnosis method according to embodiments of the present invention.

Referring to FIG. 3, a processor 200 in a battery abnormality diagnosis apparatus may monitor at least one of temperature and temperature change amount of a plurality of batteries inside a battery assembly (S310).

According to an embodiment, more specifically, the processor 200 may monitor the temperature change of each of the batteries in real time by measuring the temperature of the plurality of batteries in real time using a temperature measuring device. For example, the temperature measuring device may be a temperature sensor.

Thereafter, the processor 200 may determine whether each of the batteries is abnormal based on at least one of the temperature and temperature change amount of each of the plurality of batteries (S320).

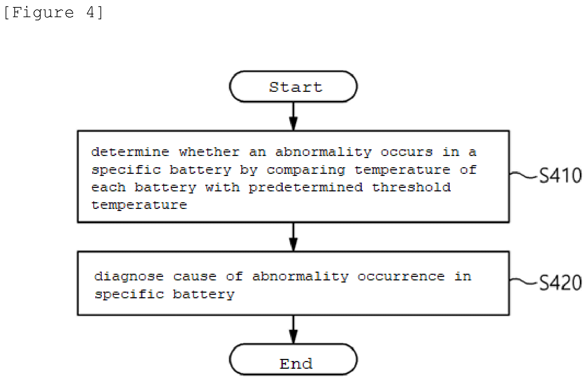

FIG. 4 is a flowchart for explaining a step of determining whether a specific battery is abnormal in a battery abnormality diagnosis method according to embodiments of the present invention.

Referring to FIG. 4, the processor 200 may determine whether an abnormality occurs in each of the batteries by comparing the temperature of each of the plurality of batteries measured in real time with a predetermined threshold temperature (S410).

Here, the predetermined threshold temperature may generally include a first threshold temperature at which a fire is expected to occur in the battery and a second threshold temperature at which deterioration of the battery is expected to occur. For example, the first threshold temperature may be 100°C and the second threshold temperature may be -50°C.

According to an embodiment, the processor 200 may determine that an abnormality has occurred in a specific battery if the temperature of the specific battery exceeds the predetermined first threshold temperature while the temperature of the specific battery is getting higher.

According to another embodiment, the processor 200 may determine that an abnormality has occurred in a specific battery if the temperature of the specific battery falls below the predetermined second threshold temperature while the temperature of the specific battery is getting lower.

However, without being limited to what has been disclosed, the processor 200 in the battery abnormality diagnosis apparatus according to embodiments of the present invention may determine that an abnormality has occurred in the battery if the absolute value of a real-time temperature change amount of a specific battery is equal to or greater than a threshold temperature, in other words, if the temperature of the specific battery increases or decreases by more than the threshold temperature.

Thereafter, the processor 200 may diagnose a cause of the abnormality of the specific battery (S420).

More specifically, according to an embodiment, the processor 200 may individually measure a temperature of at least one component located adjacent to a specific battery which is determined to have an abnormality.

Thereafter, the processor 200 may diagnose a cause of the abnormality of the specific battery based on the temperature information measured from the at least one component. Here, the at least one component may be at least one battery located adjacent to the specific battery within the battery assembly.

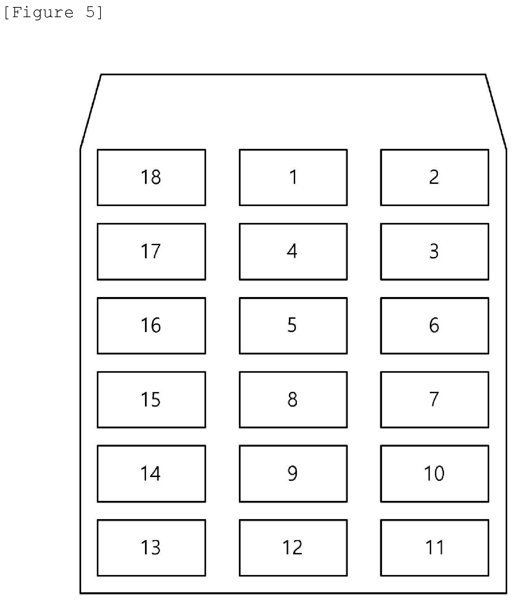

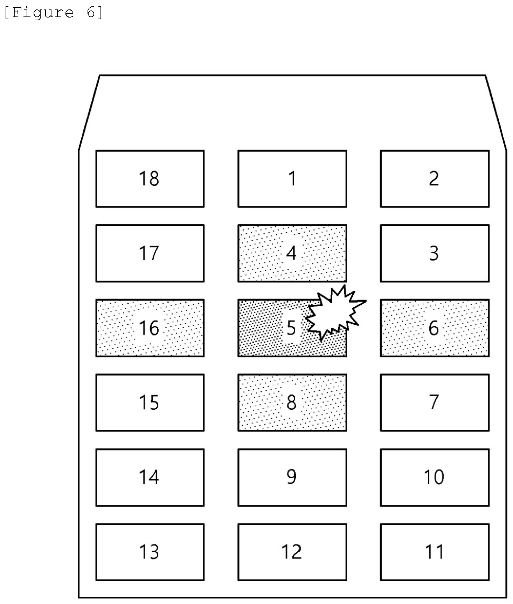

Hereinafter, a method of diagnosing the abnormality of a specific battery based on the temperature information of at least one adjacent battery will be described in more detail, in FIGS. 5 and 6.

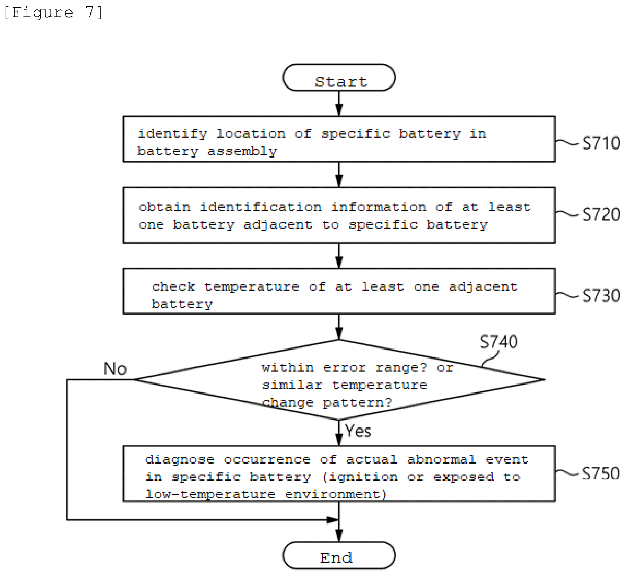

FIG. 5 is a structural diagram of a battery assembly according to embodiments of the present invention, FIG. 6 is an image showing a specific battery in which an abnormality has occurred in a battery assembly and an adjacent battery according to embodiments of the present invention, and FIG. 7 is a flowchart for explaining a method for diagnosing an abnormality occurred in a specific battery based on temperature information of at least one adjacent battery.

Referring to FIGS. 5 to 7, the processor 200 may identify a location of a specific battery in a battery assembly using cell arrangement information (S710). Here, the cell arrangement information is information that provides locations of a plurality of batteries in the battery assembly, and communication identification information of the batteries may be utilized as the information.

Thereafter, the processor 200 may obtain identification information of at least one battery adjacent to the specific battery using the cell arrangement information (S720). For example, if battery No. 5 is the specific battery, batteries No. 4, No. 6, No. 8, and No. 16 located around battery No. 5 may be identified as adjacent batteries.

Thereafter, the processor 200 may check temperature of at least one adjacent battery based on the identification information (S730). For example, the processor 200 may check the temperature of the adjacent batteries measured by a temperature measuring device.

Here, if the temperature of at least one adjacent battery is within a predetermined error range with the temperature of the specific battery, or has a similar temperature change pattern (S740), the processor 200 may diagnose that an actual abnormal event has occurred in the specific battery (S750).

In more detail according to one embodiment, the processor 200 may determine that an ignition has occurred in the specific battery if the temperature of at least one adjacent battery exceeds a first threshold temperature, like the temperature of the specific battery. Accordingly, the processor 200 may transmit an ignition state notification to the driver and stop operation of the battery assembly.

In more detail according to another embodiment, the processor 200 may determine that an environmental change has occurred in a low-temperature state when the temperature of at least one adjacent battery is lower than a second threshold temperature, like the temperature of the specific battery. Accordingly, the processor 200 may control output of the battery assembly to be minimized in order to prevent problems due to deterioration of the batteries occurring in a low-temperature environment. However, without being limited to what has been disclosed, the processor 200 may control output of each battery in the battery assembly to be minimized.

Meanwhile, when there is no change in the temperature of at least one adjacent battery, the processor 200 may determine that an abnormality has occurred in the temperature measuring device (S740). Accordingly, the processor 200 may operate only until the corresponding driving cycle and provide an alarm to the driver to induce inspection.

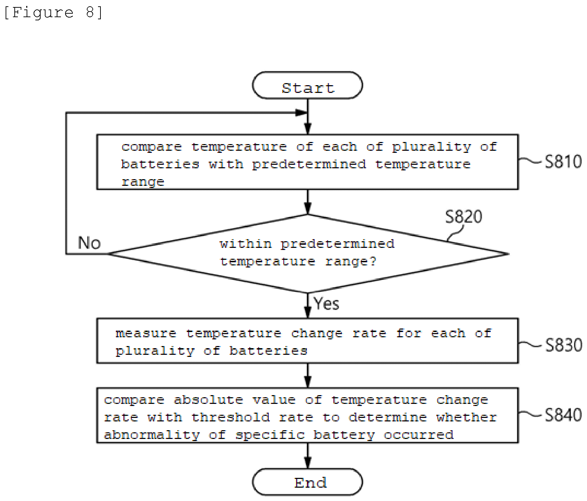

FIG. 8 is a flowchart for explaining a step of determining whether a specific battery is abnormal in the battery abnormality diagnosis methods according to another embodiment of the present invention.

Referring to FIG. 8, the processor 200 may compare a temperature of each of the plurality of batteries measured in real time with a predetermined temperature range (S810). Here, the predetermined temperature range may be an optimal operating temperature at which battery deterioration is prevented. For example, the predetermined temperature range may be from -40°C to +60°C.

Thereafter, the processor 200 may measure a temperature change rate for each of the plurality of batteries (S830) if at least one of the temperature and temperature change amount of the plurality of batteries is within the predetermined temperature range (S820).

More specifically, according to the embodiment, the processor 200 may calculate the temperature change rate at each predetermined cycle based on the temperature information of each of the batteries measured in real time. For example, the processor 200 may calculate the temperature change amount of each battery at a 3-second cycle.

Thereafter, the processor 200 may individually compare the absolute value of the temperature change rate of each battery with at least one predefined threshold rate to determine whether an abnormality has occurred in a specific battery (S840).

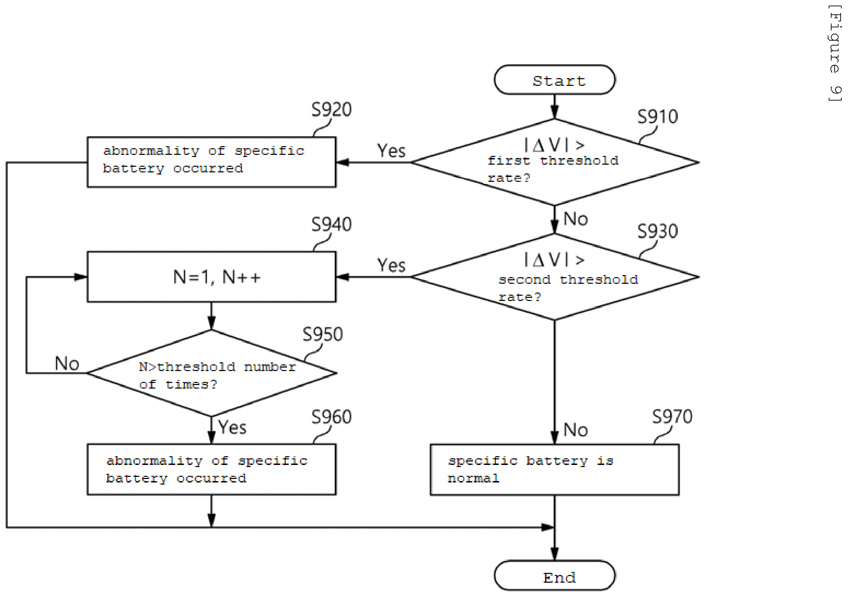

FIG. 9 is a flowchart for explaining a method of determining whether a specific battery has an abnormality occurrence based on a temperature change rate of each battery, in the battery abnormality diagnosis method according to another embodiment of the present invention.

Referring to FIG. 9, if the absolute value of the temperature change rate of any one specific battery among the batteries is greater than or equal to a predetermined first threshold rate (S910), the processor 200 may determine that an abnormality has occurred in the specific battery (S920).

Thereafter, the processor 200 may diagnose a cause of the abnormality of the specific battery by checking the temperature of at least one adjacent component accommodated inside the battery assembly to which the specific battery belongs. Here, the adjacent components may be at least one of adjacent batteries or electrical components located adjacent to the specific battery inside the battery assembly.

For example, if the adjacent components are adjacent batteries, the processor 200 may check a temperature of the adjacent batteries. Thereafter, if a temperature change of the adjacent batteries has a temperature pattern similar to that of the specific battery, the processor 200 may diagnose that an actual abnormal event has occurred in the specific battery.

In more detail according to one embodiment, the processor 200 may determine that a fire has occurred in the specific battery if the temperature of at least one adjacent battery is elevated at a first threshold rate or higher, like the temperature change rate of the specific battery. Accordingly, the processor 200 may transmit an ignition status notification to the driver and stop the operation of the battery assembly.

In more detail according to another embodiment, the processor 200 may determine that an environmental change to a low temperature state has occurred if the temperature of at least one adjacent battery is dropped at a first threshold rate or higher, like the temperature change rate of the specific battery. Accordingly, the processor 200 may control output of the battery assembly to be minimized in order to prevent problems due to deterioration of batteries occurring in a low temperature environment. However, without being limited to what has been disclosed, the processor 200 may control the output of each battery in the battery assembly to be minimized.

Meanwhile, if the absolute value of the temperature change rate of the specific battery is lower than the first threshold rate but equal to or higher than the second threshold rate (S930), the processor 200 may count (Counting, N) this (S940). Here, the counted number of times information (N) may be stored in a storage space. For example, the processor 200 may store the counted number of times information (N) in the storage device (600) in FIG. 2.

Thereafter, if the counted number of times of the specific battery exceeds a predetermined threshold number of times (S950), the processor 200 may determine that an abnormality has occurred in the specific battery (S960). Here, the processor 200 may determine that an unspecified heat source is located in a location adjacent to the vehicle and transmit a warning signal to the driver. In addition, the processor 200 may reset a measurement cycle of temperature, pressure, etc. to a shorter cycle than before in order to prevent abnormalities in batteries due to temperature changes in the external environment.

Meanwhile, the processor 200 may determine that the specific battery is normal if the absolute value of the temperature change rate of the specific battery is less than the second threshold rate by considering it as a rate change within the error range due to a natural phenomenon (S970).

In the foregoing, a battery abnormality diagnosis apparatus and method according to embodiments of the present invention have been described.

The battery abnormality diagnosis apparatus according to embodiments of the present invention may monitor temperature and temperature change amount of each of a plurality of batteries in a battery assembly, and determine whether an abnormality occurs in each of the plurality of batteries based on the temperature and temperature change amount, thereby detecting an abnormality in the batteries even when the batteries are operating within a predetermined normal operating temperature range.

In addition, the battery abnormality diagnosis apparatus according to embodiments of the present invention monitors temperature change of the battery in which an abnormality occurs and adjacent batteries placed adjacent thereto, thereby diagnosing a cause of the abnormality in a specific battery based on the temperature change of the adjacent battery. Therefore, the battery abnormality diagnosis apparatus according to embodiments of the present invention can quickly and efficiently respond when an abnormality occurs in the battery.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery abnormality diagnosis apparatus for diagnosing whether at least one battery included in a battery assembly is abnormal, the battery abnormality diagnosis apparatus comprising:
a memory; and
a processor configured to execute at least one instruction stored in the memory,
wherein the at least one instruction includes:
an instruction to monitor at least one of temperature and temperature change amount of the battery; and
an instruction to determine whether the battery is abnormal based on at least one of the temperature and the temperature change amount of the battery.

2. The battery abnormality diagnosis apparatus of claim 1, wherein the instruction to determine whether the battery is abnormal based on at least one of the temperature and the temperature change amount of the battery includes:
an instruction to determine that an abnormality has occurred in the battery if the temperature of the battery exceeds a predetermined first threshold temperature when the temperature of the battery is rising; and
an instruction to determine that an abnormality has occurred in the battery if the temperature of the battery is below a predetermined second threshold temperature when the temperature of the battery is dropping.

3. The battery abnormality diagnosis apparatus of claim 1, wherein the at least one instruction further includes:
an instruction to diagnose a cause of the abnormality of the abnormal battery if it is determined that an abnormality has occurred in the battery.

4. The battery abnormality diagnosis apparatus of claim 3, wherein the instruction to diagnose the cause of the abnormality of the abnormal battery includes:
an instruction to measure temperature of at least one component adjacent to the abnormal battery based on arrangement information of batteries in the battery assembly; and
an instruction to diagnose that ignition has occurred in the abnormal battery if the temperature of the at least one component is within a predetermined error range compared to the temperature of the abnormal battery when the temperature of the abnormal battery is rising.

5. The battery abnormality diagnosis apparatus of claim 3, wherein the instruction to diagnose the cause of the abnormality of the abnormal battery includes:
an instruction to measure temperature of at least one component adjacent to the abnormal battery based on arrangement information of batteries in the battery assembly; and
an instruction to diagnose that the abnormal battery is in a low temperature state if the temperature of the at least one component is within a predetermined error range compared to the temperature of the abnormal battery when the temperature of the abnormal battery is dropping.

6. The battery abnormality diagnosis apparatus of claim 3, wherein the instruction to diagnose the cause of the abnormality of the abnormal battery includes:
an instruction to measure temperature of at least one component adjacent to the abnormal battery based on arrangement information of batteries in the battery assembly; and
an instruction to diagnose that an abnormality has occurred in a temperature measuring device in the battery assembly if temperature change of the at least one component compared to the abnormal battery is outside a predetermined error range.

7. The battery abnormality diagnosis apparatus of claim 1, wherein the instruction to monitor at least one of temperature and temperature change amount of the battery includes:
an instruction to measure a rate at which the temperature of the battery changes.

8. The battery abnormality diagnosis apparatus of claim 7, wherein the instruction to determine whether the battery is abnormal based on the at least one of the temperature and the temperature change amount of the battery includes:
an instruction to determine whether the battery is abnormal by comparing an absolute value of the rate with a predetermined threshold rate.

9. The battery abnormality diagnosis apparatus of claim 8, wherein the instruction to determine whether the battery is abnormal by comparing the absolute value of the rate with the predetermined threshold rate includes:
an instruction to determine that the battery is abnormal when the absolute value of the rate is equal to or greater than a predetermined first threshold rate and a temperature change occurs in at least one component adjacent to the battery based on the arrangement information of batteries in the battery assembly.

10. The battery abnormality diagnosis apparatus of claim 9, wherein the instruction to determine whether the battery is abnormal by comparing the absolute value of the rate with the predetermined threshold rate includes:
an instruction to count a number of times when the absolute value of the rate is equal to or higher than a second threshold rate and lower than the first threshold rate, wherein the second threshold rate is lower than the first threshold rate.

11. The battery abnormality diagnosis apparatus of claim 10, wherein the instruction to count the number of times includes:
an instruction to provide a warning signal to a user to prevent abnormality of the battery due to temperature changes in external environment when the number of times is equal to or greater than a predetermined threshold number of times.

12. The battery abnormality diagnosis apparatus of claim 8, wherein the instruction to determine whether the battery is abnormal by comparing the absolute value of the rate with the predetermined threshold rate includes:
an instruction to determine that the battery is normal if the absolute value of the rate is less than the second threshold rate.

13. A battery abnormality diagnosis method for diagnosing whether at least one battery included in a battery assembly is abnormal, the battery abnormality diagnosis method comprising:
monitoring at least one of temperature and temperature change amount of the battery; and
determining whether the battery is abnormal based on at least one of the temperature and the temperature change amount of the battery.

14. The battery abnormality diagnosis method of claim 13, wherein the determining of whether the battery is abnormal based on at least one of the temperature and the temperature change amount of the battery includes:
determining that an abnormality has occurred in the battery if the temperature of the battery exceeds a predetermined first threshold temperature when the temperature of the battery is rising; and
determining that an abnormality has occurred in the battery if the temperature of the battery is below a predetermined second threshold temperature when the temperature of the battery is dropping.

15. The battery abnormality diagnosis method of claim 13, further comprising:
diagnosing a cause of the abnormality of the abnormal battery if it is determined that an abnormality has occurred in the battery.

16. The battery abnormality diagnosis method of claim 15, wherein the diagnosing the cause of the abnormality of the abnormal battery includes:
measuring temperature of at least one component adjacent to the abnormal battery based on arrangement information of batteries in the battery assembly; and
diagnosing that ignition has occurred in the abnormal battery if the temperature of the at least one component is within a predetermined error range compared to the temperature of the abnormal battery when the temperature of the abnormal battery is rising.

17. The battery abnormality diagnosis method of claim 15, wherein the diagnosing the cause of the abnormality of the abnormal battery includes:
measuring temperature of at least one component adjacent to the abnormal battery based on arrangement information of batteries in the battery assembly; and
diagnosing that the abnormal battery is in a low temperature state if the temperature of the at least one component is within a predetermined error range compared to the temperature of the abnormal battery when the temperature of the abnormal battery is dropping.

18. The battery abnormality diagnosis method of claim 15, wherein the diagnosing the cause of the abnormality of the abnormal battery includes:
measuring temperature of at least one component adjacent to the abnormal battery based on arrangement information of batteries in the battery assembly; and
diagnosing that an abnormality has occurred in a temperature measuring device in the battery assembly if temperature change of the at least one component compared to the abnormal battery is outside a predetermined error range.

19. The battery abnormality diagnosis method of claim 13, wherein the monitoring at least one of the temperature and the temperature change amount of the battery includes:
measuring a rate at which the temperature of the battery changes.

20. The battery abnormality diagnosis method of claim 19, wherein the determining whether the battery is abnormal based on the at least one of the temperature and the temperature change amount of the battery includes:

21. The battery abnormality diagnosis method of claim 20, wherein the determining whether the battery is abnormal by comparing the absolute value of the rate with the predetermined threshold rate includes:
determining that the battery is abnormal when the absolute value of the rate is equal to or greater than a predetermined first threshold rate and a temperature change occurs in at least one component adjacent to the battery based on the arrangement information of batteries in the battery assembly.

22. The battery abnormality diagnosis method of claim 20, wherein the determining whether the battery is abnormal by comparing the absolute value of the rate with the predetermined threshold rate includes:
counting a number of times when the absolute value of the rate is equal to or higher than a second threshold rate and lower than the first threshold rate, wherein the second threshold rate is lower than the first threshold rate.

23. The battery abnormality diagnosis method of claim 22, wherein the counting the number of times includes:
providing a warning signal to a user to prevent abnormality of the battery due to temperature changes in external environment when the number of times is equal to or greater than a predetermined threshold number of times.

24. The battery abnormality diagnosis method of claim 20, wherein the determining whether the battery is abnormal by comparing the absolute value of the rate with the predetermined threshold rate includes:
determining that the battery is normal if the absolute value of the rate is less than a predetermined second threshold rate.
